# DEMANDE DE BREVET EUROPEEN

(11) **EP 4 270 905 A1**
(43) Date de publication de la demande: **01.11.2023**
(21) Numéro de dépôt: 23167952.3
(22) Date de dépôt: 14.04.2023
(51) Int. Cl.: H04L 67/131, H04L 67/52, H04L 67/50, H04W 4/021

(54) **PROCEDE DE GEOLOCALISATION D'UNE ACTION D'UN UTILISATEUR OU DE L' AVATAR D'UN UTILISATEUR DANS UN ENVIRONNEMENT RESPECTIVEMENT REEL OU VIRTUEL**

(30) Priorité: 25.04.2022 FR 2203797
(71) Demandeur: Orange, 92130 Issy-les-Moulineaux (FR)
(72) Inventeur: BOUDIN, Fabrice, 92326 Chatillon (FR); BRUN, Arnaud, 92326 Chatillon (FR)

(57) **Abrégé**

L'invention concerne un procédé de géolocalisation comprenant ce qui suit :
- détecter (S1ᵣᵥ) qu'un utilisateur ou un avatar réalise une action dans son environnement réel ou virtuel respectivement,
- déterminer (S3ᵣᵥ) des premières données de géolocalisation d'une zone de l'environnement, dans laquelle l'action a été détectée,
- à partir desdites premières données et de deuxièmes données représentatives de l'action détectée :
-- déterminer (S9ᵣᵥ) que l'action correspondant aux premières données a déjà été effectuée par plusieurs personnes physiques ou plusieurs avatars dans ladite zone de l'environnement réel ou virtuel respectivement, et que cette action est prépondérante par rapport à une autre action effectuée dans ladite zone,
-- identifier (S10ᵣᵥ) ladite zone en tant que zone de l'environnement réel ou virtuel dédiée à la fourniture d'au moins un élément en lien avec les deuxièmes données ou configurable en fonction desdites deuxièmes données.

## Description

### Domaine de l'invention

L'invention concerne la géolocalisation d'un utilisateur et l'exploitation des données de géolocalisation, notamment pour proposer des contenus et/ou des produits et/ou des services en lien avec ces données.

### Art antérieur

Aujourd'hui, différentes solutions permettent notamment à des fournisseurs ou éditeurs de contenus, à des enseignes commerciales, d'effectuer des recommandations de contenus et d'approvisionner des espaces publicitaires (dans leurs applications et web-applications) après avoir collecté puis exploité certaines données personnelles d'utilisateurs. Ces données personnelles peuvent par exemple fournir des indications sur le profil (âge, sexe, profession, etc.), les modes de vies et les centres d'intérêts de chacun des utilisateurs. Une fois collectées, ces données peuvent éventuellement être anonymisées ou semi-anonymisées conformément aux réglementations en vigueur sur la protection des données personnelles.

En particulier, dans les solutions dites « géolocalisées » (c'est-à-dire exploitant également la géolocalisation de l'utilisateur), ces recommandations personnalisées et ces publicités personnalisées (ou autres contenus ciblés) sont déterminées par l'exploitation de données personnelles associées à des données contextuelles, notamment la géolocalisation de l'utilisateur. La géolocalisation permet, par exemple, de déterminer que l'utilisateur se trouve à proximité d'un endroit particulier, un point de vente par exemple. De telles données contextuelles de géolocalisation de l'utilisateur peuvent être intéressantes à exploiter afin de proposer à cet utilisateur par exemple un contenu, une recommandation de contenu, une publicité, qui soient en lien avec le lieu dans lequel se trouve l'utilisateur et/ou en lien avec le profil de ce dernier.

Bien que cette technique de géolocalisation permette d'améliorer la recommandation de contenus, elle est toutefois circonscrite à un utilisateur à la fois, et pour une zone géographique donnée qui est parfois définie de manière floue ou dont le périmètre est beaucoup trop grand pour espérer mettre en oeuvre une exploitation fiable des données de géolocalisation. En outre, cette technique de géolocalisation est mise en oeuvre pour procurer un seul type de service à l'utilisateur qui a été géolocalisé, qui est celui de la recommandation de contenus.

### Objet et résumé de l'invention

Un des buts de l'invention est de remédier à des inconvénients de l'état de la technique précité en proposant un procédé de géolocalisation qui a la capacité d'exploiter de manière beaucoup plus riche et plus fine les données de géolocalisation d'un utilisateur que celles qui sont exploités dans les procédés de géolocalisation classiques.

A cet effet, un objet de la présente invention concerne un procédé de géolocalisation comprenant ce qui suit :
- détecter qu'un utilisateur ou un avatar d'un utilisateur réalise une action dans son environnement réel ou virtuel respectivement,
- déterminer des données de géolocalisation d'une zone de l'environnement réel ou virtuel, dans laquelle l'action a été détectée,
- à partir des données de géolocalisation et de données représentatives de l'action détectée :
   -- déterminer que l'action correspondant aux données de géolocalisation a déjà été mise en oeuvre par une pluralité de personnes physiques dans la zone de l'environnement réel ou par une pluralité d'avatars dans la zone de l'environnement virtuel, et que la mise en oeuvre de l'action est prépondérante par rapport à la mise en oeuvre d'au moins une autre action dans la zone de l'environnement réel ou virtuel,
   -- identifier la zone en tant que zone de l'environnement réel ou virtuel dédiée à la fourniture d'au moins un élément en lien avec les données représentatives de l'action détectée ou en tant que zone de l'environnement réel ou virtuel, configurable en fonction des données.

Le procédé de géolocalisation selon l'invention permet avantageusement de localiser une zone d'un environnement réel, respectivement virtuel, dans laquelle un utilisateur, respectivement un avatar d'un utilisateur, réalise une action, de manière à identifier avec précision si la zone localisée de l'environnement réel ou virtuel est considérée comme propice à proposer un ou plusieurs éléments en lien avec l'action qui a été détectée comme prépondérante dans cette zone ou à être modifiée/configurée d'une certaine façon en fonction de l'action qui a été détectée dans cette zone. Une action est prépondérante par rapport à une autre action si elle mise en oeuvre de manière plus fréquente ou qu'elle est affectée d'un poids supérieur à celui d'une autre action, etc.

On appelle environnement virtuel un environnement simulé numériquement à l'aide d'un dispositif de réalité virtuelle, dans lequel un ou plusieurs avatars sont susceptibles de se déplacer et d'interagir avec cet environnement.

Ainsi, grâce au procédé de géolocalisation selon l'invention, l'identification de la zone en tant que zone dédiée à la fourniture d'au moins un élément en lien avec les données représentatives de l'action détectée ou en tant que zone configurable en fonction desdites données ne sera effective que si une telle action a été mise en oeuvre de manière prépondérante par rapport à d'autres actions mises en oeuvre dans cette zone par un certain nombre d'individus ou d'avatars, selon que l'action a été détectée dans l'environnement réel ou virtuel respectivement.

Selon un mode de réalisation particulier,
- l'action réalisée dans l'environnement réel comprend une interaction de l'utilisateur avec une interface présente dans l'environnement réel ou une activité de l'utilisateur qui a été détectée de manière autonome par un appareil de détection d'activité,
- l'action réalisée dans l'environnement virtuel comprend une interaction de l'avatar d'un utilisateur avec un objet ou un autre avatar dans l'environnement virtuel.

Grâce à ce mode de réalisation, le procédé de géolocalisation selon l'invention permet de géolocaliser différentes actions possibles, une interaction ou une activité de l'utilisateur dans l'environnement réel, une interaction de l'avatar de l'utilisateur avec un objet ou un autre avatar dans l'environnement virtuel, de manière à ce que les données représentatives de ces actions soient le plus variées possibles et enrichissent ainsi le traitement des données à mettre en oeuvre par un dispositif de traitement.

Selon un autre mode de réalisation particulier, l'élément fourni dans la zone identifiée est un contenu multimédia.

Un tel mode de réalisation permet avantageusement de recommander ou de proposer un ou plusieurs contenus multimédias précisément dans la zone de l'environnement réel ou virtuel qui a été identifiée grâce au procédé de géolocalisation, ce ou ces contenus étant pertinents par rapport à l'action détectée dans cette zone. Grâce à l'invention, le contenu multimédia recommandé ou proposé dans la zone identifiée est non seulement lié à la nature de l'action qui a été mise en oeuvre, mais il est aussi rendu disponible dans la zone où a été précisément détectée cette action. Il en résulte une recommandation de contenus qui est particulièrement bien ciblée et qui, en outre, est adaptée aussi bien à un environnement réel que virtuel dans lequel évolue une personne physique ou un avatar d'une personne physique respectivement.

Un tel contenu multimédia peut être par exemple transmis, via un réseau de communication, sous la forme d'un lien Internet, d'une notification, etc., sur un terminal d'un utilisateur qui se déplace dans la zone de l'environnement réel qui a été identifiée, respectivement sur un terminal restituant un environnement virtuel dans une zone duquel évolue un avatar d'un utilisateur. Un tel contenu multimédia est par exemple de la musique jazz, si l'action ayant été détectée dans cette zone comprenait par exemple une recherche sur le Web d'un compositeur de musique de jazz. Ainsi, grâce à ce mode de réalisation, il est possible d'adapter la recommandation de contenus multimédia de manière à limiter l'encombrement du réseau de communication qui est provoqué par la transmission intempestive de multiples contenus multimédia aux utilisateurs, en ne transmettant que des contenus dont la pertinence a été statistiquement vérifiée. Il est également possible d'anticiper les besoins d'un utilisateur en lui fournissant par exemple une information dont il pourrait avoir besoin par la suite dans la zone de l'environnement réel dans laquelle il se trouve (par exemple la localisation des toilettes dans un centre commercial, la localisation d'une borne Wi-Fi dans une gare, etc..) et dont il a été déterminé statistiquement que cette information a été recherchée de très nombreuses fois auparavant par des utilisateurs ayant circulé dans cette zone. Ainsi l'invention permet d'optimiser la recommandation de contenus telle que mise en oeuvre dans les systèmes de recommandation de contenus actuels.

Selon un autre exemple, un tel contenu multimédia peut être diffusé dans la zone identifiée de l'environnement réel, par exemple sous la forme d'un message audio, d'une image ou d'une vidéo. Si par exemple il a été déterminé que dans la zone identifiée de l'environnement réel, l'action relative à l'achat en ligne d'articles de sport est prépondérante :
- un message audio publicitaire sera diffusé par un ou plusieurs haut-parleurs dans ladite zone identifiée, ledit message restituant de manière sonore des informations sur par exemple une enseigne de sport située dans cette zone ou non,
- une image publicitaire vantant une enseigne d'articles de sport ou une salle de sport sera affichée sur un panneau publicitaire dans la zone identifiée,
- etc.

Selon un autre mode de réalisation particulier, si la zone de l'environnement réel ou virtuel est identifiée en tant que zone configurable, la zone est modifiée pour fournir un produit ou un service, en lien avec l'action détectée, à un utilisateur qui se trouve dans la zone identifiée de l'environnement réel ou à un avatar d'un utilisateur qui se trouve dans la zone identifiée de l'environnement virtuel.

Un tel mode de réalisation permet avantageusement de réagencer d'une autre manière la zone de l'environnement réel ou virtuel qui a été identifiée grâce au procédé de géolocalisation, de sorte que cette zone puisse proposer des produits et des services pertinents par rapport à l'action prépondérante détectée dans cette zone. Grâce à l'invention, le ou les produit(s)/service(s) proposés dans la zone identifiée par le dispositif de traitement est/sont non seulement lié(s) à la nature de l'action qui a été mise en oeuvre, mais il(s) est/sont aussi rendu(s) disponible(s) dans la zone où a été précisément détectée cette action prépondérante. Ainsi par exemple :
- une zone identifiée dans l'environnement réel pourra être réaménagée pour intégrer par exemple un parcours sportif, si l'action ayant été détectée comme prépondérante dans cette zone était une activité de course à pied,
- une zone identifiée dans l'environnement virtuel pourra être remodélisée numériquement de manière à intégrer par exemple un magasin de chaussures, si l'action ayant été détectée comme prépondérante dans cette zone était l'achat en ligne de chaussures par des avatars d'utilisateurs.

Selon un autre mode de réalisation particulier, pour un utilisateur donné, à un instant donné, le procédé de géolocalisation est mis en oeuvre simultanément dans l'environnement réel où évolue l'utilisateur et/ou dans au moins un environnement virtuel où évolue un avatar de l'utilisateur.

Un tel mode de réalisation permet à un instant donné de détecter toutes les actions possibles qu'un utilisateur ou son avatar met en oeuvre à cet instant donné. Ainsi, pour cet utilisateur qui, à cet instant donné, est actif dans une zone de l'environnement réel et qui en parallèle est présent dans une zone d'un environnement virtuel (ex : jeu vidéo, visite virtuelle d'un appartement, etc.), il est possible de traiter :
- non seulement des premières données de géolocalisation de la zone de l'environnement réel dans lequel évolue l'utilisateur, ainsi que des premières données représentatives de l'action que l'utilisateur a réalisée dans cette zone,
- mais également des deuxièmes données de géolocalisation de la zone de l'environnement virtuel dans lequel évolue l'avatar de l'utilisateur, ainsi que des deuxièmes données représentatives de l'action que cet avatar a réalisée dans cette zone de l'environnement virtuel.

Un tel mode de réalisation permet ainsi avantageusement, à un instant donné, une mutualisation de la géolocalisation d'un utilisateur dans une zone de l'environnement réel et d'au moins un avatar de cet utilisateur dans une zone de l'environnement virtuel, ce qui permet d'alimenter un dispositif de traitement de données en de multiples données de géolocalisation, en vue d'une exploitation beaucoup plus complète de ces données, afin d'optimiser le taguage des zones géolocalisées en tant que zones dédiée à la fourniture d'au moins un élément en lien avec les données représentatives de l'action détectée ou en tant que zone configurable en fonction desdites données.

Bien entendu, le procédé de géolocalisation peut être mis en oeuvre uniquement lorsque l'utilisateur évolue dans l'environnement réel ou uniquement lorsqu'un ou plusieurs avatars de l'utilisateur évolue dans respectivement un ou plusieurs environnements virtuels.

Selon un autre mode de réalisation particulier, les données de géolocalisation de la zone dudit au moins un environnement virtuel qui sont déterminées lors de la mise en oeuvre du procédé de géolocalisation sont associées à un indicateur d'activité de l'avatar de l'utilisateur dans cette zone, ledit indicateur étant mis à une première valeur représentative d'une absence d'activité de l'avatar ou à une deuxième valeur représentative d'une activité effective de l'avatar.

Un tel mode de réalisation permet d'optimiser le traitement des données afin de ne prendre en compte que les données représentatives d'une activité effective de l'avatar, dans un souci d'optimisation de l'identification de la zone en tant que zone dédiée à la fourniture d'au moins un élément en lien avec les données représentatives de l'action détectée ou en tant que zone configurable en fonction desdites données.

Selon un autre mode de réalisation particulier, les données de géolocalisation de la zone comprennent :
- les coordonnées en deux dimensions, respectivement en trois dimensions, d'un point de la zone, et
- le rayon d'un cercle, respectivement d'une sphère, centré(e) sur le point.

Un tel mode de réalisation a pour avantage de fournir des données de géolocalisation se présentant sous un format très simple, ce qui réduit le coût de transmission de ces données si celles-ci sont transmises à un dispositif de traitement.

Selon un autre mode de réalisation particulier, les données représentatives de l'action détectée comprennent au moins un identifiant représentatif du type d'action. Un tel mode de réalisation a pour avantage de porter à la connaissance du dispositif de traitement quel type d'action a été réalisé à un instant donné pour un utilisateur ou un avatar donné, dans telle zone de l'environnement réel ou virtuel, en vue d'être exploitée statistiquement de manière fiable et avec une granularité suffisamment fine par le dispositif de traitement.

Ainsi, par exemple, si l'action est une interaction de l'utilisateur avec son terminal, par exemple une recherche par mots-clés, la sélection d'un lien Internet, un achat en ligne, ces trois actions seront respectivement associées à trois identifiants distincts caractérisant de manière unique l'action effectuée.

Selon un autre exemple, si un avatar fait du jardinage dans son environnement virtuel, cette action spécifique sera associée à un identifiant distinct des trois identifiants précités.

Selon un autre mode de réalisation particulier, l'identifiant représentatif du type d'action est associé à au moins un indicateur d'un objet visé par l'action.

Un tel mode de réalisation permet avantageusement de compléter les données représentatives de l'action par un indicateur représentatif de l'objet qui est visé par l'action, ce qui permet d'enrichir encore davantage le traitement de données. Un tel objet peut être par exemple :
- un produit acheté sur le Web par l'utilisateur dans la zone de son environnement réel ou par l'avatar d'un utilisateur dans la zone de son environnement virtuel : l'indicateur de ce produit sera alors par exemple le nom de ce produit ;
- un mot-clé recherché sur le Web par l'utilisateur dans la zone de son environnement réel ou par l'avatar d'un utilisateur dans la zone de son environnement virtuel : l'indicateur de l'objet sera alors par exemple l'intitulé de ce mot-clé ;
- un contenu multimédia lu en streaming sur le terminal de l'utilisateur dans la zone de son environnement réel ou sur un terminal restituant un environnement virtuel dans une zone duquel évolue un avatar d'un utilisateur : l'indicateur de l'objet sera alors par exemple un titre ou l'auteur de ce contenu multimédia ou plus généralement toute métadonnée associée à ce contenu multimédia ;
- un thème ou un domaine associé à l'action mise en oeuvre dans l'environnement réel ou virtuel : l'indicateur de l'objet sera alors par exemple un mot associé à ce thème ou à ce domaine. Si par exemple, l'action détectée dans une zone de l'environnement réel est de la course à pied, l'indicateur sera par exemple le mot « course à pied » ou « running » en anglais. Si par exemple, dans une zone de l'environnement virtuel, l'avatar de l'utilisateur joue le rôle d'un chef d'orchestre de musique classique, l'indicateur de l'objet sera par exemple le mot « musique classique »,
- etc.

Selon un autre mode de réalisation particulier, l'identifiant représentatif du type d'action est associé à une valeur de pondération de l'action.

Un tel mode de réalisation permet avantageusement d'affecter à un type d'action une valeur de pondération particulière, cette affectation étant fonction du contexte du traitement de données à mettre en oeuvre par le dispositif de traitement.

Ainsi par exemple, si les données traitées sont exploitées dans le but de réaménager une zone commerciale, si les actions détectées dans cette zone sont un achat en ligne d'un produit et une simple recherche sur le Web de ce produit, le type d'action « achat » aura une valeur de pondération plus élevée que celle affectée au type d'action « recherche ».

Les différents modes ou caractéristiques de réalisation précités peuvent être ajoutés indépendamment ou en combinaison les uns avec les autres, au procédé de géolocalisation tel que défini ci-dessus.

L'invention concerne également un dispositif de géolocalisation comprenant un processeur qui est configuré pour mettre en oeuvre ce qui suit :
- détecter qu'un utilisateur ou un avatar d'un utilisateur réalise une action dans son environnement réel ou virtuel respectivement,
- déterminer des données de géolocalisation d'une zone de l'environnement réel ou virtuel, dans laquelle l'action a été détectée,
- transmettre à un dispositif de traitement de données lesdites données de géolocalisation et des données représentatives de l'action détectée.

L'invention concerne également un dispositif de traitement de données de géolocalisation, comprenant un processeur qui est configuré pour mettre en oeuvre ce qui suit :
- recevoir en provenance d'un dispositif de géolocalisation, des données de géolocalisation d'une zone d'un environnement réel ou virtuel, dans laquelle a été détectée une action réalisée par un utilisateur ou un avatar d'un utilisateur, dans son environnement réel ou virtuel respectivement, ainsi que des données représentatives de l'action détectée,
- quand il a été déterminé que l'action correspondant aux données reçues a déjà été mise en oeuvre par une pluralité de personnes physiques dans la zone de l'environnement réel, respectivement par une pluralité d'avatars dans la zone de l'environnement virtuel, et que la mise en oeuvre de l'action est prépondérante par rapport à la mise en oeuvre d'au moins une autre action dans la zone, identifier la zone en tant que zone dédiée à la fourniture d'au moins un élément en lien avec les données représentatives de l'action détectée ou en tant que zone configurable en fonction des données.

L'invention concerne également un système de géolocalisation comprenant :
- le dispositif de géolocalisation selon l'invention précité,
- le dispositif de traitement de données de géolocalisation selon l'invention précité.

L'invention concerne également un programme d'ordinateur comportant des instructions pour la mise en oeuvre du procédé de géolocalisation conforme à l'invention, selon l'un quelconque des modes particuliers de réalisation décrits précédemment, lorsque ledit programme est exécuté par un processeur.

De telles instructions peuvent être stockées durablement dans un support mémoire non transitoire du système de géolocalisation mettant en oeuvre le procédé de géolocalisation selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile, un disque dur ou un SSD.

D'autre part, le support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par un exemple un réseau de type Internet. Alternativement, le support d'enregistrement peut être un circuit intégré dans lequel le programme est incorporé, le circuit étant adapté pour exécuter ou pour être utilisé dans l'exécution du procédé de de géolocalisation précité.

Selon un exemple de réalisation, la présente technique est mise en oeuvre au moyen de composants logiciels et/ou matériels. Dans cette optique, le terme "dispositif" peut correspondre dans ce document aussi bien à un composant logiciel, qu'à un composant matériel ou à un ensemble de composants matériels et logiciels.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
La figure 1A représente un système de géolocalisation selon un premier mode de réalisation de l'invention,
La figure 1B représente un système de géolocalisation selon un deuxième mode de réalisation de l'invention,
La figure 1C représente un système de géolocalisation selon un troisième mode de réalisation de l'invention,
La figure 2A représente un dispositif de géolocalisation, selon un mode de réalisation particulier de l'invention,
La figure 2B représente un dispositif de géolocalisation, selon un mode de réalisation particulier de l'invention,
La figure 3 représente un dispositif de traitement de données de géolocalisation, selon un mode de réalisation particulier de l'invention,
La figure 4A représente les principales actions mises en oeuvre dans le procédé de géolocalisation selon un premier mode de réalisation particulier de l'invention,
La figure 4B représente les principales actions mises en oeuvre dans le procédé de géolocalisation selon un deuxième mode de réalisation particulier de l'invention,
La figure 4C représente les principales actions mises en oeuvre dans le procédé de géolocalisation selon un troisième mode de réalisation particulier de l'invention,
La figure 5 représente différentes actions mises en oeuvre dans le procédé de géolocalisation selon un mode de réalisation particulier de l'invention.

### Description détaillée d'un mode de réalisation de l'invention

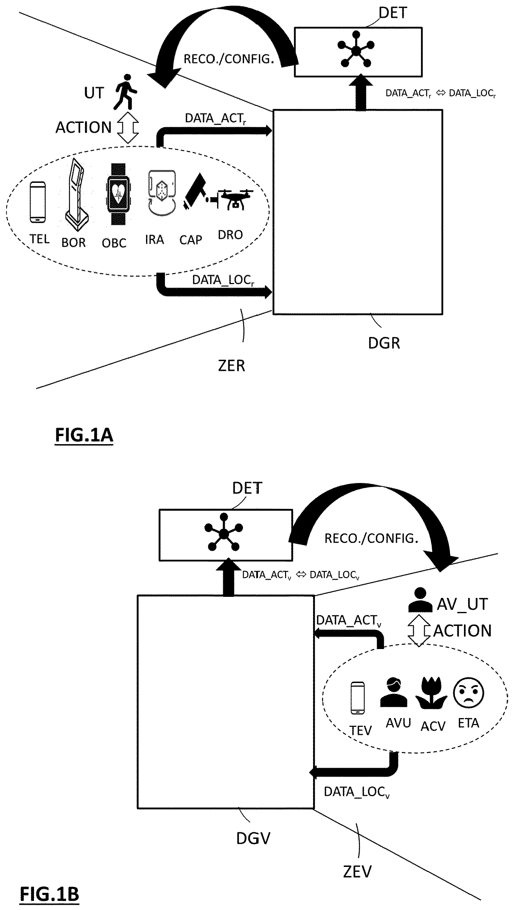

La figure 1A représente un système de géolocalisation d'un utilisateur UT selon un premier mode de réalisation de l'invention. Dans ce premier mode de réalisation, la géolocalisation de l'utilisateur UT est mise en oeuvre uniquement dans un environnement réel dans lequel l'utilisateur UT évolue, par exemple une rue, un parc, un magasin, etc., et plus précisément, dans une zone ZER de cet environnement réel.

A cet effet, un tel système de géolocalisation comprend un dispositif DGR de géolocalisation de l'utilisateur UT qui est configuré pour :
- détecter une action/activité réalisée par l'utilisateur UT dans la zone ZER,
- déterminer la localisation de l'utilisateur UT dans la zone ZER, au moment où il effectue l'action/activité,
- générer un ensemble de données EDR qui comprend des données d'activité DATA_ACTᵣ représentatives de l'action/activité réalisée et des données DATA_LOCᵣ représentatives de la localisation de la zone ZER dans laquelle l'utilisateur UT a réalisé l'action/activité.

A titre d'exemples non exhaustifs, le type d'actions/activités détectées dans la zone ZER comprend :
- une interaction de l'utilisateur UT avec un terminal TEL de type smartphone (« téléphone intelligent »), pour par exemple acheter un produit en ligne, écouter de la musique stockée sur le terminal TEL ou en mode streaming, effectuer une recherche d'un bien, d'un produit ou d'un service via un navigateur Internet du terminal TEL, etc. ;
- une interaction de l'utilisateur UT avec une borne multimédia BOR installée dans la zone ZER, pour par exemple chercher un itinéraire, trouver un lieu particulier si la zone ZER est par exemple un endroit dans une ville ;
- une action ou activité particulière de l'utilisateur UT dans la zone ZER, ladite action ou activité étant détectée de façon transparente pour l'utilisateur UT au moyen d'un objet connecté OBC (ex : montre connectée) porté par celui-ci et pouvant être par exemple une activité sportive (ex : course à pied), une activité stressante (ex : visionnage d'un film d'horreur, attente d'un train, etc.) ou relaxante (ex : sieste dans un parc, massage, etc.), une activité de repos telle que le sommeil de l'utilisateur par exemple, un état affectif particulier de l'utilisateur (ex : niveau de stress, émotion, humeur, etc.) ;
- une interaction de l'utilisateur UT avec une interface IRA de réalité augmentée, par exemple une application en réalité augmentée sur le terminal TEL ou sur une tablette (non représentée) qui permet à l'utilisateur UT de voir un produit chez lui, par exemple dans un coin ZER de son salon, sans se déplacer, avant de l'acheter, ou encore un hologramme qui s'affiche devant l'utilisateur UT sur le quai ZER d'une gare et avec lequel l'utilisateur UT interagit pour connaître les horaires des trains,... ;
- une action/activité particulière de l'utilisateur UT détectée par un capteur CAP placé dans la zone ZER, par exemple un micro, une caméra, un détecteur de présence, etc....qui détecte par exemple que l'utilisateur UT chante, se repose sur un banc, appelle au secours, etc..
- une action/activité particulière de l'utilisateur UT détectée par un drone DRO survolant la zone ZER, par exemple le retrait d'argent à un distributeur, l'entrée de l'utilisateur dans une boutique, etc...

Le dispositif de géolocalisation DGR est configuré en outre pour localiser la zone ZER dans laquelle l'utilisateur UT réalise une action/activité. Dans un exemple de réalisation, la géolocalisation de ladite zone ZER est associée à des données comprenant :
- les coordonnées en deux dimensions (x,y), respectivement en trois dimensions (x,y,z), d'un point de ladite zone ZER, et
- le rayon d'un cercle, respectivement d'une sphère, centré(e) sur ledit point.

La géolocalisation peut être déterminée directement par le dispositif DGR de géolocalisation si par exemple ce dernier est situé physiquement dans la zone ZER ou être obtenue à partir du smartphone TEL, de la borne multimédia BOR, de l'objet connecté OBC, de l'interface IRA de réalité augmentée, du capteur CAP, du drone DRO, etc., si le dispositif de géolocalisation DGR est situé à distance de la zone ZER. Dans ce dernier cas, les informations de géolocalisation sont transmises au dispositif de géolocalisation DGR.

Dans un mode de réalisation préféré, les données de géolocalisation DATA_LOCᵣ comprennent :
- un point de la zone ZER qui peut être par exemple un point représentatif d'une position dans la zone ZER du smartphone TEL, de la borne multimédia BOR, de l'objet connecté OBC, de l'interface IRA de réalité augmentée, du capteur CAP, du drone DRO, etc., et/ou
- un point représentatif d'une position de l'utilisateur UT au moment où celui-ci réalise l'action/l'activité dans la zone ZER, et/ou
- un point représentatif d'une position du dispositif de géolocalisation DGR lui-même, si celui-ci se trouve physiquement dans la zone ZER, etc...

Le dispositif de géolocalisation DGR traite alors les données d'action/activité DATA_ACTᵣ et les données de géolocalisation DATA_LOCᵣ de manière à générer un ensemble de données EDR qui comprend, sous un format particulier dédié, une association des données DATA_ACTᵣ avec les données DATA_LOCᵣ.

Selon un mode préféré de réalisation, dans le cas où le dispositif de géolocalisation DGR est situé dans la zone ZER, les données de géolocalisation générées par ce dispositif sont par exemple les suivantes :
- les coordonnées (xᵣ₀, yᵣ₀) du dispositif DGR dans la zone ZER, par exemple latitude 48.8396952, longitude 2.2399123 ;
- le rayon d'un cercle centré sur les coordonnées (xᵣ₀, yr₀) du dispositif DGR, par exemple 50 mètres ;
- un ou plusieurs identifiants des actions ou activités les plus
prépondérantes/fréquentes déjà réalisées par différents utilisateurs dans la zone ZER, ces actions ayant été déterminées/apprises par un dispositif DET de traitement de données de géolocalisation qui complète le système de géolocalisation selon l'invention.

Un tel dispositif DET de traitement de données de géolocalisation, qui sera décrit plus loin dans la description, est configuré pour identifier, à partir des données DATA_ACTᵣ et DATA_LOCᵣ, si la zone ZER est considérée en tant que zone dédiée à la fourniture d'au moins un élément en lien avec les données DATA_ACTᵣ ou en tant que zone configurable en fonction desdites données DATA_ACTᵣ.

Au sens de l'invention, un élément comprend par exemple une information particulière, un contenu multimédia, un message publicitaire sous forme textuelle, audio et/ou vidéo, un contenu en réalité augmentée, par exemple un hologramme, etc... De tels éléments peuvent être fournis dans la zone ZER au moyen par exemple d'un serveur de diffusion de contenus via un réseau de communication, d'une régie publicitaire, etc... S'il s'agit par exemple d'un message publicitaire, il peut être affiché sur un panneau installé dans la zone ZER ou sinon diffusé par un haut-parleur installé dans la zone ZER, etc.

La zone ZER est dite configurable en fonction des données DATA_ACTᵣ en ce sens qu'elle peut être modifiée ou réagencée différemment pour tenir compte des données DATA_ACTᵣ. Ainsi par exemple, dans le cas où les données DATA_ACTᵣ sont relatives à l'achat en ligne d'un produit, par exemple une paire de chaussures, via le terminal TEL, dans la zone ZER, et que le dispositif de traitement DET a déterminé que cette action d'achat a été mise en oeuvre fréquemment ou de manière prépondérante dans la zone ZER par un grand nombre d'utilisateurs, la zone ZER sera réagencée pour pouvoir y installer un magasin de chaussures ou simplement complétée pour y intégrer par exemple un panneau publicitaire vantant une marque de chaussures. Selon un autre exemple, dans le cas où les données DATA_ACTᵣ sont relatives à une activité de type course à pied dans la zone ZER, qui est détectée par l'objet connecté OBC porté par l'utilisateur UT, et que le dispositif de traitement DET a déterminé que cette activité particulière a été mise en oeuvre fréquemment ou de manière prépondérante dans la zone ZER par un grand nombre d'utilisateurs, la zone ZER sera réagencée pour pouvoir y intégrer un parcours sportif. Selon encore un autre exemple, dans le cas où les données DATA_ACTᵣ sont relatives à une recherche d'itinéraires dans la zone ZER, via la borne BOR, et que le dispositif de traitement DET a déterminé que cette action de recherche particulière a été mise en oeuvre fréquemment ou de manière prépondérante dans la zone ZER par un grand nombre d'utilisateurs, la zone ZER sera réagencée pour pouvoir y intégrer par exemple une interface de réalité augmentée telle que par exemple un mur d'informations communicant avec lequel un utilisateur pourra interagir pour chercher son chemin.

La figure 1B représente un système de géolocalisation selon un deuxième mode de réalisation de l'invention. Dans ce deuxième mode de réalisation, la géolocalisation est mise en oeuvre uniquement dans un environnement virtuel dans lequel un avatar AV_UT d'un utilisateur évolue, par exemple un jeu vidéo, un lieu clos modélisé numériquement (ex : théâtre, bâtiment, etc.) ou un lieu ouvert modélisé numériquement (stade, parc, forêt, etc.), et plus précisément, dans une zone ZEV de cet environnement virtuel.

A cet effet, un tel système de géolocalisation comprend un dispositif DGV de géolocalisation dudit avatar AV_UT qui est configuré pour :
- détecter une action/activité réalisée par l'avatar AV_UT dans la zone ZEV,
- déterminer la localisation de l'avatar AV_UT dans la zone ZEV, au moment où il effectue l'action/activité,
- générer un ensemble de données EDV qui comprend des données d'action/activité DATA_ACTᵥ représentatives de l'action/activité réalisée par l'avatar AV_UT dans la zone ZEV et des données DATA_LOCᵥ représentatives de la localisation de la zone ZEV dans laquelle l'avatar AV_UT a réalisé l'action/activité.

A titre d'exemples non exhaustifs, le type d'actions/activités détectées dans la zone ZEV comprend :
- une interaction de l'avatar AV_UT avec une interface virtuelle d'un smartphone virtuel TEV pour par exemple rechercher un contenu à l'aide d'un ou plusieurs mots-clés, regarder un film, acheter un produit en ligne, écouter de la musique en streaming, etc...,
- une interaction de l'avatar AV_UT avec un autre avatar AVU présent dans la zone ZEV, ladite interaction pouvant être mise en oeuvre dans le cadre par exemple d'un jeu de combat, d'une partie de cache-cache impliquant les avatars AV_UT et AVU, etc.,
- une interaction de l'avatar AV_UT avec un objet ACV présent dans la zone ZEV, par exemple des fleurs d'un jardin si l'avatar AV_UT est un jardinier,
- un état affectif, par exemple un niveau de stress, une humeur ou une émotion particulière, etc., qui est attribué(s) au préalable par un utilisateur à son avatar AV_UT, sous la forme par exemple d'une icône représentative de ce niveau de stress, de cette émotion ou de cette humeur, ou d'une modification de l'avatar AV_UT le représentant conformément à l'état affectif qui lui a été attribué (ex : en cas d'humeur joyeuse, l'avatar sourit, en cas de stress, l'avatar est tremblotant, etc..), cet état affectif n'étant pas obligatoirement le même que celui ressenti par l'utilisateur UT ;

L'avatar AV_UT peut être l'avatar de l'utilisateur UT si ce dernier dispose d'au moins un avatar dans un environnement virtuel ou être l'avatar d'un utilisateur différent de l'utilisateur UT. L'avatar AV_UT peut être l'avatar d'un autre utilisateur que l'utilisateur UT si ce dernier ne dispose pas d'au moins un avatar dans un environnement virtuel.

Le dispositif de géolocalisation DGV est configuré en outre pour localiser la zone ZEV dans laquelle l'avatar AV_UT réalise une action/activité.

Le dispositif de géolocalisation DGV peut être disposé dans un appareil ou un terminal qui restitue l'environnement virtuel, par exemple un ordinateur, un casque de réalité virtuelle, un smartphone, etc., ou être relié par tout moyen de communication adapté à cet appareil ou terminal.

Dans un exemple de réalisation, la géolocalisation de ladite zone ZEV est associée à des données DATA_LOCᵥ comprenant :
- les coordonnées numériques en deux dimensions (x,y), respectivement en trois dimensions (x,y,z), d'un point de ladite zone ZEV dans un repère numérique modélisé pour l'environnement virtuel, et
- le rayon d'un cercle, respectivement d'une sphère, centré(e) sur ledit point.

Dans un mode de réalisation préféré, les données de géolocalisation DATA_LOCᵥ comprennent par exemple :
- un point représentatif d'une position dans la zone ZEV de l'avatar AV_UT lorsqu'il met en oeuvre son action/activité, et/ou
- un point représentatif d'une position de l'autre avatar AVU dans la zone ZEV, de la fleur cueillie par l'avatar AV_UT jouant le rôle d'un jardinier, etc., et/ou
- un point de la zone ZEV qui peut être par exemple un point représentatif d'une position dans la zone ZEV du smartphone virtuel TEV, de l'objet ACV avec lequel interagit l'avatar AV_UT, etc., et/ou
- un point représentatif d'une position numérique affectée préalablement au dispositif de géolocalisation DGV lui-même,
- etc...

Le dispositif de géolocalisation DGV traite alors les données d'action/activité DATA_ACTᵥ et les données de géolocalisation DATA_LOCᵥ de manière à générer un ensemble de données EDV qui comprend, sous un format particulier dédié, une association des données DATA_ACT_{V} avec les données DATA_LOCᵥ.

De manière identique au premier mode de réalisation, les données DATA_ACT_{V} comprennent un ou plusieurs identifiants des actions ou activités les plus prépondérantes/fréquentes déjà réalisées par différents avatars d'utilisateurs dans la zone ZEV, ces actions ayant été déterminées/apprises par le dispositif DET de traitement de données de géolocalisation précité, lequel complète le système de géolocalisation selon l'invention.

Dans ce deuxième mode de réalisation, le dispositif DET de traitement de données de géolocalisation est configuré pour traiter aussi bien l'ensemble de données EDR que l'ensemble de données EDV. Il est bien entendu que dans d'autres modes de réalisation, un dispositif de traitement de données pourrait être dédié au traitement de l'ensemble de données EDR et un autre dispositif de traitement de données pourrait être dédié au traitement de l'ensemble de données EDV.

Le dispositif DET de traitement de données précité est configuré dans ce deuxième mode de réalisation pour identifier, à partir des données DATA_ACTᵥ et DATA_LOCᵥ, si la zone ZEV est considérée en tant que zone dédiée à la fourniture d'au moins un élément en lien avec les données DATA_ACTᵥ ou en tant que zone configurable en fonction desdites données DATA_ACTᵥ.

Au sens de l'invention, un élément d'un environnement virtuel comprend par exemple une information particulière, un contenu multimédia, un message publicitaire sous forme textuelle, audio et/ou vidéo, un objet en réalité virtuelle, etc...

La zone ZEV est dite configurable en fonction des données DATA_ACTᵥ en ce sens qu'elle peut être modifiée ou réagencée différemment à l'aide d'un logiciel adapté pour tenir compte des données DATA_ACTᵥ afin de modifier graphiquement ma zone ZEV. Ainsi par exemple, dans le cas où les données DATA_ACTᵥ sont relatives à l'achat en ligne d'un produit, par exemple un livre, via le terminal virtuel TEV, dans la zone ZEV, et que le dispositif de traitement DET a déterminé que cette action d'achat particulière a été mise en oeuvre fréquemment ou de manière prépondérante dans la zone ZEV par un grand nombre d'avatars d'utilisateurs, la zone ZEV sera reconfigurée numériquement/graphiquement pour pouvoir intégrer une librairie ou une médiathèque virtuelle. Selon un autre exemple, dans le cas où les données DATA_ACTᵥ sont relatives à une humeur maussade de l'avatar AV_UT dans la zone ZEV et que le dispositif de traitement DET a déterminé que ce type d'humeur a été ressentie fréquemment ou de manière prépondérante dans la zone ZEV par un grand nombre d'avatars d'utilisateurs, par exemple un lien vers un serveur d'écoute de musique douce sera transmis en mode incrustation dans la zone ZEV.

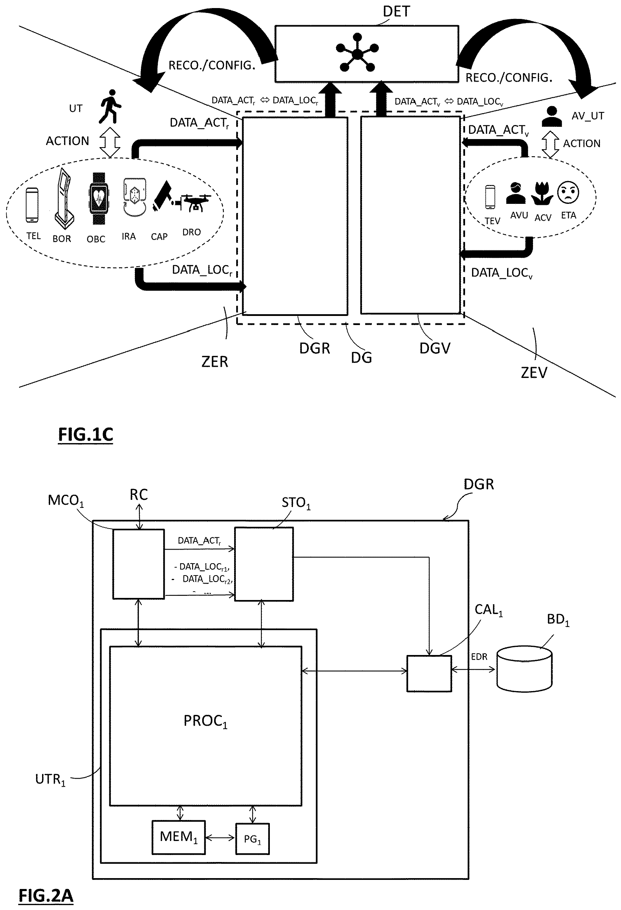

La figure 1C représente un système de géolocalisation selon un troisième mode de réalisation de l'invention. Dans ce troisième mode de réalisation, la géolocalisation est mise en oeuvre aussi bien dans un environnement réel du type précité que dans un environnement virtuel du type précité. Un tel système de géolocalisation est particulièrement adapté pour un utilisateur UT qui est à la fois actif dans l'environnement réel, et dont un ou plusieurs avatars sont actifs dans respectivement un ou plusieurs environnements virtuels.

Ce troisième mode de réalisation utilise des éléments communs à ceux des figures 1A et 1B. Pour cette raison, ces éléments sont désignés avec les mêmes références et ne sont pas décrits à nouveau.

Dans les trois modes de réalisation qui ont été représentés ci-dessus, le dispositif de traitement DET est distinct du dispositif de géolocalisation DGR ou DGV. Bien entendu, conformément à un autre mode de réalisation, le dispositif DET de traitement de données et le dispositif de géolocalisation DGR ou DGV peuvent former une seule entité.

On va maintenant décrire, en référence à la figure 2A, la structure simplifiée d'un dispositif de géolocalisation DGR utilisé dans le système de géolocalisation selon l'invention.

Un tel dispositif de géolocalisation DGR comprend :
- une interface de communication MCO₁ configurée pour communiquer, via un réseau de communication RC₁ adapté, avec le dispositif de traitement DET et des dispositifs de détection d'action/activité, tels que le smartphone TEL, la borne multimédia BOR, l'objet connecté OBC, l'interface de réalité virtuelle IRA, le capteur CAP, le drone DRO représentés sur les figures 1A et 1C,
- une mémoire STO₁ dans laquelle :
   -- sont enregistrées initialement les données de géolocalisation DATA_LOCᵣ₀ du dispositif de géolocalisation DGR, si ce dernier est installé dans la zone ZER, et sont potentiellement enregistrées d'autres données complémentaires de géolocalisation DATA_LOCᵣ₁, DATA_LOCᵣ₂, ...reçues en provenance des dispositifs de détection d'action/activité, tels que le smartphone TEL, la borne multimédia BOR, l'objet connecté OBC, l'interface de réalité virtuelle IRA, le capteur CAP, le drone DRO représentés sur les figures 1A et 1C, si de tels dispositifs sont configurés pour mettre en oeuvre une géolocalisation de l'utilisateur UT, et
   -- sont enregistrées les données DATA_ACTᵣ du type précité, lesquelles sont reçues en provenance des dispositifs de détection d'action/activité, tels que le smartphone TEL, la borne multimédia BOR, l'objet connecté OBC, l'interface de réalité virtuelle IRA, le capteur CAP, le drone DRO représentés sur les figures 1A et 1C.

Le dispositif de géolocalisation DGR comprend en outre un dispositif de calcul CAL₁ configuré pour formater les données DATA_LOCᵣ₀, DATA_LOCᵣ₁, DATA_LOCᵣ₂, ... et DATA_ACTᵣ sous la forme d'une association de données qui se présente par exemple sous la forme de la table TAB, suivante, pour un utilisateur UT donné :

| Numéro de l'action/activité | Horodatage de l'action/activité | Type d'action/activité (Id₁) | Paramètre(s) associé(s) à l'action/activité | Localisation de l'utilisateur UT dans la zone ZER au moment de la réalisation de l'action/activité | Indicateur d'activité (Ia₁) |
|---|---|---|---|---|---|
| 1 | 14/01/2022 | 00001 | A254H256ZJ | (X1ᵣ, Y1ᵣ, Z1ᵣ) | 1 |
| | 17:04:53 | | | | |
| 2 | 14/01/2022 | 00002 | 65GJ1H365P | (X2ᵣ, Y2ᵣ, Z2ᵣ) | 1 |
| | 17:05:07 | | | | |
| 3 | 14/01/2022 | 00001 | 9865H6E89 | (X3ᵣ, Y3r, Z3ᵣ) | 1 |
| | 18:24:32 | | | | |
| 4 | 14/01/2022 | 00005 | 985L6L5PS0 | (X4ᵣ, Y4ᵣ, Z4ᵣ) | 1 |
| | 18:29:12 | | | | |
| 5 | ... | ... | ... | ... | ... |

Dans un mode de réalisation particulier, la table TAB₁ comprend six colonnes, parmi lesquelles :
- la première colonne intitulée « *Numéro de l'action*/*activité* » indique un numéro d'ordre chronologique attribué à chaque action/activité mise en oeuvre par l'utilisateur UT au cours du temps, dans telle ou telle zone ZER de l'environnement réel,
- la deuxième colonne intitulée « *Horodatage de l'action*/*activité* » indique la date et l'heure à laquelle une action/activité particulière de l'utilisateur UT a été détectée,
- la troisième colonne intitulée « *Type d'action*/*activité (Id₁)* » indique le type d'action/activité mise en oeuvre par l'utilisateur UT,
- la quatrième colonne intitulée « *Paramètre(s) associé(s) à l'action*/*activité »* renseigne au moins un indicateur ou un paramètre lié à l'action/activité mise en oeuvre par l'utilisateur UT,
- la cinquième colonne intitulée « *Localisation de l'utilisateur UT dans la zone ZER au moment de la réalisation de l'action*/*activité* » renseigne les coordonnées, par exemple en trois dimensions, contenues dans les données DATA_LOCᵣ,
- la sixième colonne intitulée « *Indicateur d'activité (Ia₁)* », qui est optionnelle, renseigne sur l'état d'activité ou d'absence d'activité de l'utilisateur UT au moment de la détection. Dans l'environnement réel, cet indicateur est par exemple mis à 1 par défaut pour indiquer que l'utilisateur UT est toujours actif, même s'il dort ou même s'il est au repos.

Le type d'action/activité « Id₁ » caractérise de manière unique une action ou une activité particulière. A titre d'exemples non exhaustifs :
- l'identifiant Id₁=00001 correspond à la consultation d'un contenu, par exemple l'écoute d'une chanson, le visionnage d'un film, etc...
- l'identifiant Id₁=00002 correspond à l'achat en ligne d'un produit, par exemple des chaussures, un livre, une application, etc...,
- l'identifiant Id₁=00003 correspond à une recherche par mot(s)-clé(s) à l'aide d'un terminal de communication, etc...,
- l'identifiant Id₁=00004 correspond à l'activation d'un lien Internet,
- l'identifiant Id₁=00005 correspond à une référence d'activité mise en oeuvre par l'utilisateur UT telle que par exemple du sport, du chant, un retrait d'argent à un distributeur, etc..., ici le sport ayant par exemple la référence 985L6L5PS0.

L'identifiant Id₁=00001 est associé à au moins un paramètre ou un indicateur représentatif de l'objet de l'action/activité mise en oeuvre, par exemple une référence A254H256ZJ ou 9865H6E89 du contenu consulté. L'identifiant Id₁=00001 peut être également associé à un deuxième paramètre tel que par exemple une métadonnée caractérisant le contenu consulté.

L'identifiant Id₁=00002 est associé à au moins un paramètre ou un indicateur représentatif de l'objet de l'action/activité mise en oeuvre, par exemple une référence 65GJ1 H365P du produit acheté. L'identifiant Id₁=00002 peut être également associé à un ou plusieurs autres paramètres tels que par exemple des mots-clés caractérisant le produit acheté, son lieu de fabrication, la marque de ce produit, etc... L'identifiant Id₁=00003 est associé à au moins un paramètre ou un indicateur représentatif de l'objet de l'action/activité mise en oeuvre, par exemple la référence du site Web classé en premier à l'issue de la recherche. L'identifiant Id₁=00003 peut être également associé à un ou plusieurs autres paramètres tels que par exemple les mots-clés de la recherche, la référence des pages Web consultées à l'issue de la recherche, etc.,

L'identifiant Id₁=00004 est associé à au moins un paramètre ou un indicateur représentatif de l'objet de l'action/activité mise en oeuvre, par exemple l'URL (« *Uniform Resource Locator* » en anglais) vers laquelle pointe le lien. L'identifiant Id₁=00004 peut être également associé à un ou plusieurs autres paramètres tels que par exemple la localisation du serveur Web qui stocke la ressource accédée via le lien, le nom de domaine, la référence de la ressource accédée via le lien, etc... L'identifiant Id₁=00005 est associé à au moins un paramètre ou un indicateur représentatif de l'objet de l'action/activité mise en oeuvre, par exemple la catégorie de l'activité détectée, sport, repos, sommeil, etc. L'identifiant Id₁=00005 peut être également associé à un ou plusieurs autres paramètres tels que par exemple la marque du survêtement de l'utilisateur UT si l'activité détectée est une activité sportive, la référence du livre que l'utilisateur UT est en train de lire si l'activité détectée est de type repos, etc.

Une telle table TAB₁ est stockée dans une base de données BD₁ du dispositif de géolocalisation DGR ou rendue accessible par ce dernier s'il n'a pas les ressources matérielles et logicielles nécessaires pour stocker cette base de données BD₁.

Une table TAB₁ est stockée pour chaque utilisateur UT.

Selon un mode particulier de réalisation de l'invention, les actions exécutées par le dispositif de géolocalisation DGR sont mises en oeuvre par des instructions d'un programme d'ordinateur PG₁. Pour cela, le dispositif DGR a l'architecture classique d'un ordinateur et comprend notamment une mémoire MEM₁, une unité de traitement UTR₁, équipée par exemple d'un processeur PROC₁, et pilotée par le programme d'ordinateur PG₁ stocké en mémoire MEM₁. Le programme d'ordinateur PG₁ comprend des instructions pour effectuer les actions de détermination et de stockage de données DATA_ACTᵣ représentatives de l'action/activité de l'utilisateur UT dans la zone ZER, de détermination et de stockage des données de géolocalisation DATA_LOCᵣ de cette action/activité détectée, de formatage des données DATA_ACTᵣ et DATA_LOCᵣ sous la forme de la table TAB₁, de stockage de la table TAB₁ dans la base de données BD₁, dans le cadre du procédé de géolocalisation qui va être décrit ci-dessous, lorsque le programme est exécuté par le processeur PROC₁, selon l'un quelconque des modes particuliers de réalisation de l'invention.

A l'initialisation, les instructions de code du programme d'ordinateur PG₁ sont par exemple chargées dans une mémoire RAM (« *Read Access Memory* » en anglais) (non représentée) avant d'être exécutées par le processeur PROC₁. Le processeur PROC₁ de l'unité de traitement UTR₁ met notamment en oeuvre les actions précitées, selon les instructions du programme d'ordinateur PG₁.

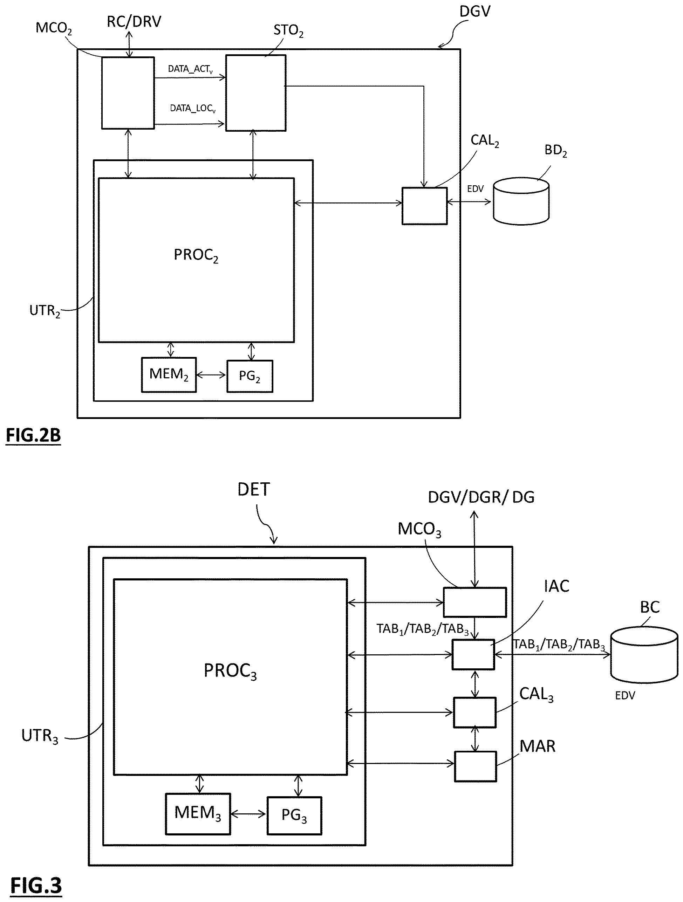

On va maintenant décrire, en référence à la figure 2B, la structure simplifiée d'un dispositif de géolocalisation DGV utilisé dans le système de géolocalisation selon l'invention, tel que représenté sur les figures 1B et 1C.

Un tel dispositif de géolocalisation DGV comprend :
- une interface de communication MCO₂ configurée pour non seulement communiquer avec le dispositif de traitement DET via un réseau de communication RC adapté, mais également pour recevoir, en provenance d'un dispositif DRV de restitution de l'environnement virtuel, les données DATA_ACTᵥ du type précité, représentatives d'une action/activité d'un avatar AV_UT dans une zone ZEV de l'environnement virtuel restitué,
- une mémoire STO₂ dans laquelle sont enregistrées les données de géolocalisation DATA_LOCᵥ de la zone ZEV dans laquelle l'avatar AV_UT met en oeuvre une action/activité, ainsi que les données DATA_ACTᵥ représentatives de cette action. Le dispositif de géolocalisation DGV comprend en outre un dispositif de calcul CAL₂ configuré pour formater les données DATA_LOCᵥ et DATA_ACTᵥ sous la forme d'une association de données qui se présente par exemple sous la forme de la table TAB₂ suivante, pour un avatar AV_UT donné :

| Numéro de l'action/activité | Horodatage de l'action/activité | Type d'action/activité (Id₂) | Paramètre(s) associé(s) à l'action/activité | Localisation de l'avatar AV_UT dans la zone ZEV au moment de la réalisation de l'action/activité | indicateur d'activité (Ia₂) de l'avatar AV_UT |
|---|---|---|---|---|---|
| 1 | 14/01/2022 | 00001 | V457K482TX | (X1ᵥ₁, Y1ᵥ₁, Z1ᵥ₁) | 1 |
| | 17:05:02 | | | | |
| 2 | 14/01/2022 | ---- | ---- | ---- | 0 |
| | 17:15:45 | | | | |
| 3 | 14/01/2022 | 00002 | 65MD4X1652 | (X2ᵥ₁, Y2ᵥ₁, Z2ᵥ₁) | 1 |
| | 17:22:18 | | | | |
| 4 | 14/01/2022 | 00001 | C 159 H956SH | (X3ᵥ₁, Y3ᵥ₁, Z3ᵥ₁) | 1 |
| | 18:02:36 | | | | |
| 5 | 14/01/2022 | 00004 | 47RG4MF540 | (X4ᵥ₁, Y4ᵥ₁, Z4ᵥ₁) | 1 |
| | 18:34:16 | | | | |
| 6 | ... | ... | ... | ... | ... |

Dans un mode de réalisation particulier, la table TAB₂ comprend six colonnes, parmi lesquelles :
- la première colonne intitulée « *Numéro de l'action*/*activité* » indique un numéro d'ordre chronologique attribué à chaque action/activité mise en oeuvre par l'avatar AV_UT au cours du temps, dans telle ou telle zone ZEV de l'environnement virtuel,
- la deuxième colonne intitulée « *Horodatage de l'action*/*activité* » indique la date et l'heure à laquelle une action/activité particulière de l'avatar AV_UT a été détectée,
- la troisième colonne intitulée « *Type d'action*/*activité (Id₂)* » indique le type d'action/activité mise en oeuvre par l'avatar AV_UT,
- la quatrième colonne intitulée « *Paramètre(s) associé(s) à l'action*/*activité* » renseigne au moins un indicateur ou un paramètre lié à l'action/activité mise en oeuvre par l'avatar AV_UT,
- la cinquième colonne intitulée « *Localisation de l'avatar AV_UT dans la zone ZEV au moment de la réalisation de l'action*/*activité* » renseigne les coordonnées numériques par exemple en trois dimensions d'une position de l'avatar AV_UT au moment où ce dernier met en oeuvre l'action/activité,
- la sixième colonne intitulée « *Indicateur d'activité* (Ia₂) *de l'avatar AV_JT* », qui est optionnelle, renseigne sur l'état d'activité ou d'absence d'activité de l'avatar AV_UT au moment de la détection. Dans l'environnement virtuel, cet indicateur est par exemple :
   -- mis à 0 pour indiquer que l'avatar AV_UT n'est pas actif au moment de la détection, soit parce que l'avatar AV_UT ne fait pas d'action/activité particulière au moment de la détection ou soit parce que le dispositif DRV de restitution de l'environnement virtuel est éteint et ne fournit aucune information au dispositif de géolocalisation DGV ;
   -- mis à 1 dès que l'avatar AV_UT est actif au moment de la détection. Le type d'action/activité « Id₂ » caractérise de manière unique une action ou une activité particulière. A titre d'exemples non exhaustifs :
- l'identifiant Id₂=00001 correspond à la consultation d'un contenu, par exemple l'écoute d'une chanson, le visionnage d'un film, etc...,
- l'identifiant Id₂=00002 correspond à l'achat en ligne d'un produit, par exemple des chaussures, un livre, une application, etc...,
- l'identifiant Id₂=00003 correspond à une recherche par mot(s)-clé(s) à l'aide d'un terminal de communication virtuel tel que le terminal TEV des figures 1B et 1C, etc...,
- l'identifiant Id₂=00004 correspond à l'activation d'un lien Internet,
- l'identifiant Id₂=00005 correspond à une activité mise en oeuvre par l'avatar AV_UT telle que par exemple du jardinage, de la boxe, etc...,

L'identifiant Id₂=00001 est associé à au moins un paramètre ou un indicateur représentatif de l'objet de l'action/activité mise en oeuvre, par exemple une référence V457K482TX ou C159H956SH du contenu consulté. L'identifiant Id₂=00001 peut être également associé à un deuxième paramètre tel que par exemple une métadonnée caractérisant le contenu consulté.

L'identifiant Id₂=00002 est associé à au moins un paramètre ou un indicateur représentatif de l'objet de l'action/activité mise en oeuvre, par exemple une référence 65MD4X1652 du produit acheté. L'identifiant Id₂=00002 peut être également associé à un ou plusieurs autres paramètres tels que par exemple des mots-clés caractérisant le produit acheté, son lieu de fabrication, la marque de ce produit, etc...

L'identifiant Id₂=00003 est associé à au moins un paramètre ou un indicateur représentatif de l'objet de l'action/activité mise en oeuvre, par exemple la référence du site Web classé en premier à l'issue de la recherche. L'identifiant Id₂=00003 peut être également associé à un ou plusieurs autres paramètres tels que par exemple les mots-clés de la recherche, la référence des pages Web consultées à l'issue de la recherche, etc.,

L'identifiant Id₂=00004 est associé à au moins un paramètre ou un indicateur représentatif de l'objet de l'action/activité mise en oeuvre, par exemple l'URL (« *Uniform Resource Locator* » en anglais) vers laquelle pointe le lien. L'identifiant Id₂=00004 peut être également associé à un ou plusieurs autres paramètres tels que par exemple la localisation du serveur Web qui stocke la ressource accédée via le lien, le nom de domaine, la référence de la ressource accédée via le lien, par exemple 47RG4MF540, etc...

L'identifiant Id₂=00005 est associé à au moins un paramètre ou un indicateur représentatif de l'objet de l'action/activité mise en oeuvre, par exemple la catégorie de l'activité détectée, sport, humeur, jardinage, etc. L'identifiant Id₂=00005 peut être également associé à un ou plusieurs autres paramètres tels que par exemple la couleur de la tenue de l'avatar AV_UT si l'activité détectée est de la boxe, la référence des végétaux dont s'occupe l'avatar AV_UT si l'activité détectée est le jardinage, etc.

Une telle table TAB₂ est stockée dans une base de données BD₂ du dispositif de géolocalisation DGV ou rendue accessible par ce dernier s'il n'a pas les ressources matérielles et logicielles nécessaires pour stocker cette base de données BD₂.

Une table TAB₂ est stockée pour chaque avatar AV_UT.

Selon un mode particulier de réalisation de l'invention, les actions exécutées par le dispositif de géolocalisation DGV sont mises en oeuvre par des instructions d'un programme d'ordinateur PG₂. Pour cela, le dispositif DGV a l'architecture classique d'un ordinateur et comprend notamment une mémoire MEM₂, une unité de traitement UTR₂, équipée par exemple d'un processeur PROC₂, et pilotée par le programme d'ordinateur PG₂ stocké en mémoire MEM₂. Le programme d'ordinateur PG₂ comprend des instructions pour effectuer les actions de détermination et de stockage de données DATA_ACTᵥ représentatives de l'action/activité de l'avatar AV_UT dans la zone ZEV, de détermination et de stockage des données de géolocalisation DATA_LOCᵥ de cette action/activité détectée, de formatage des données DATA_ACTᵥ et DATA_LOCᵥ sous la forme de la table TAB₂, de stockage de la table TAB₂ dans la base de données BD₂, dans le cadre du procédé de géolocalisation qui va être décrit ci-dessous, lorsque le programme est exécuté par le processeur PROC₂, selon l'un quelconque des modes particuliers de réalisation de l'invention.

A l'initialisation, les instructions de code du programme d'ordinateur PG₂ sont par exemple chargées dans une mémoire RAM (« *Read Access Memory* » en anglais) (non représentée) avant d'être exécutées par le processeur PROC₂. Le processeur PROC₂ de l'unité de traitement UTR₂ met notamment en oeuvre les actions précitées, selon les instructions du programme d'ordinateur PG₂.

Dans le cas du système de géolocalisation représenté sur la figure 1C, et dans le cas particulier où un utilisateur UT dispose de N avatars AV_UT₁, AV_UT₂,..., AV_UT_{N} dans respectivement N environnements virtuels différents, les données DATA_LOCᵣ et DATA_ACTᵣ qui concerne l'utilisateur UT dans l'environnement réel, ainsi que les données DATA_LOCᵥ₁ et DATA_ACTᵥ₁ de son avatar AV_UT₁, les données DATA_LOCᵥ₂ et DATA_ACTᵥ₂ de son avatar AV_UT₂, ..., les données DATA_LOC_{vN} et DATA_ACT_{vN} de son avatar AV_UT_{N} sont formatées conjointement dans une même table TAB₃ telle que représentée ci-dessous :

| Numéro de l'action/a ctivité | Horodatage de l'action/activi té | Type d'action/activité (Id) | Paramètre(s) associé(s) à l'action/activité | Localisation utilisateur UT et avatar(s) de l'utilisateur UT | Indicateur d'activité (Ia) des avatars de l'utilisateur UT |
|---|---|---|---|---|---|
| 1 | 17/03/2022 | 00001 | V457K482TX | (X1ᵣ, Y1ᵣ, Z1ᵣ) | 1 |
| | 09:13:56 | ... | | (X1ᵥ₁, Y1ᵥ₁, Z1ᵥ₁) | 0 |
| | | | | | 0 |
| | | | | (X1ᵥ₂, Y1ᵥ₂, Z1ᵥ₂) | ... |
| | | 00004 | 64KD4FD137 | | 1 |
| | | | | | |
| | | | | (X1_{vN}, Y1_{vN}, Z1_{vN}) | |
| 2 | 17/03/2022 | 00002 | 65GJ1H365P | (X2ᵣ, Y2ᵣ, Z2ᵣ) | 1 |
| | 09:28:04 | | | (X2ᵥ₁, Y2ᵥ₁, Z2ᵥ₁) | 0 |
| | | | | | 0 |
| | | | | (X2ᵥ₂, Y2ᵥ₂, Z2ᵥ₂) | ... |
| | | | | | 0 |
| | | | | ... | |
| | | | | (X2_{vN}, Y2_{vN}, Z2_{vN}) | |
| 3 | ... | ... | ... | ... | ... |

On va maintenant décrire, en référence à la figure 3, la structure simplifiée d'un dispositif DET de traitement de données de géolocalisation utilisé dans le système de géolocalisation selon l'invention, tel que représenté sur les figures 1A à 1C.

Un tel dispositif DET comprend :
- une interface de communication MCO₃ configurée pour recevoir, en provenance du dispositif de géolocalisation DGR ou DGV, les tables TAB₁ et TAB₂ respectivement, ou bien encore, en provenance d'un dispositif de géolocalisation DG regroupant les deux dispositifs de géolocalisation DGR ou DGV, la table TAB₃,
- une interface IAC d'accès à une base de connaissance BC qui est configurée pour injecter dans cette dernière les informations contenues dans les tables TAB₁, TAB₂ et/ou TAB₃,
- un dispositif de calcul CALs qui est configuré pour déterminer selon le contexte d'implémentation du système de géolocalisation :
   -- si les actions/activités correspondant aux identifiants de la table TAB₁ ou TAB₃ ont déjà été mises en oeuvre de manière prépondérante, significative ou fréquente par une pluralité d'utilisateurs (personnes physiques) dans la zone ZER considérée, et/ou
   -- si les actions/activités correspondant aux identifiants de la table TAB₂ ou TAB₃ ont déjà été mises en oeuvre de manière prépondérante, significative ou fréquente par une pluralité d'avatars d'utilisateurs dans la zone ZEV considérée,
- un dispositif de marquage MAR qui est configuré pour, en cas de détermination positive du dispositif de calcul CALs :
   -- taguer/marquer la zone ZER considérée en tant que zone de l'environnement réel dédiée à la fourniture d'au moins un élément en lien avec les données DATA_ACTᵣ associées à la zone ZER ou en tant que zone de l'environnement réel configurable en fonction des données DATA_ACTᵣ,
   -- taguer/marquer la zone ZEV en tant que zone de l'environnement virtuel dédiée à la fourniture d'au moins un élément en lien avec les données DATA_ACTᵥ ou DATA_ACTᵥ₁, DATA_ACTᵥ₂,..., DATA_ACT_{vN} associées respectivement aux zones ZEV, ZEV₁, ZEV₂,..., ZEV_{N}, ou en tant que zone de l'environnement virtuel, configurable en fonction des données DATA_ACT_{V} ou DATA_ACTᵥ₁, DATA_ACTᵥ₂,..., DATA_ACT_{vN}.

Les actions déjà mises en oeuvre par la pluralité d'utilisateurs à laquelle peut appartenir l'utilisateur UT, respectivement par la pluralité d'avatars d'utilisateurs à laquelle peut appartenir l'avatar AV_UT, sont contenues dans la base de connaissance BC qui est soit contenue dans le dispositif de traitement DET s'il dispose de ressources matérielles et logicielles suffisantes, soit rendue accessible par le dispositif de traitement DET.

A titre d'exemples non exhaustifs, le dispositif de traitement DET peut être un réseau neuronal, être basé sur la technologie d'apprentissage profond (« *Deep Learning* » en anglais), être basé sur la technologie d'apprentissage statistique, etc.

Selon un mode particulier de réalisation de l'invention, les actions exécutées par le dispositif de traitement DET sont mises en oeuvre par des instructions d'un programme d'ordinateur PG₃. Pour cela, le dispositif DET a l'architecture classique d'un ordinateur et comprend notamment une mémoire MEM₃, une unité de traitement UTR₃, équipée par exemple d'un processeur PROC₃, et pilotée par le programme d'ordinateur PG₃ stocké en mémoire MEM₃. Le programme d'ordinateur PG₃ comprend des instructions pour effectuer les actions de réception des tables TAB₁, TAB₂ et/ou TAB₃, d'injection des informations de cette/ces table(s) dans la base de connaissance BC, de détermination de la pertinence des zones ZER ou ZEV, ZEV₁, ZEV₂,..., ZEV_{N}, du taguage/marquage des zones ZER ou ZEV, ZEV₁, ZEV₂,..., ZEV_{N}, dans le cadre du procédé de géolocalisation qui va être décrit ci-dessous, lorsque le programme est exécuté par le processeur PROC₃, selon l'un quelconque des modes particuliers de réalisation de l'invention.

A l'initialisation, les instructions de code du programme d'ordinateur PG₃ sont par exemple chargées dans une mémoire RAM (« *Read Access Memory* » en anglais) (non représentée) avant d'être exécutées par le processeur PROC₃. Le processeur PROC₃ de l'unité de traitement UTR₃ met notamment en oeuvre les actions précitées, selon les instructions du programme d'ordinateur PG₃.

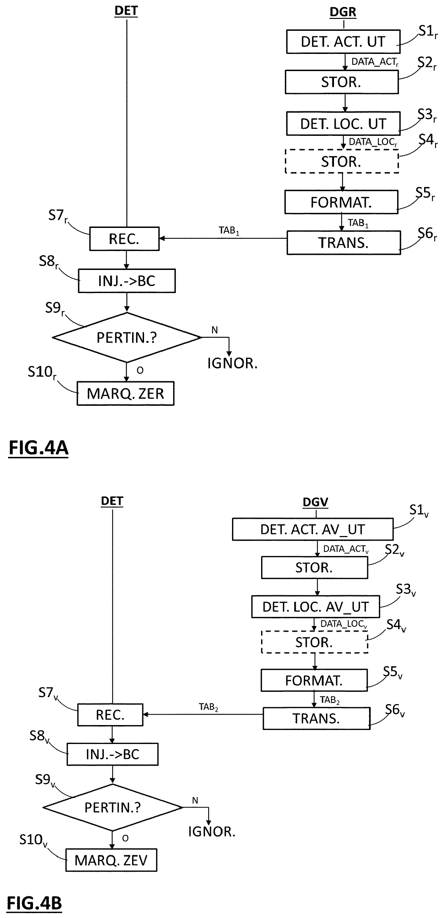

On décrit maintenant, en relation avec les figures 4A, 1A, 1C, 2A et 3, le déroulement d'un procédé de géolocalisation, selon un premier mode de réalisation particulier de l'invention.

Dans ce premier mode de réalisation, le procédé de géolocalisation est mis en oeuvre par le système de géolocalisation représenté sur les figures 1A et 1C.

Le procédé de géolocalisation de la figure 4A est mis en oeuvre pour un utilisateur donné UT, pour une durée donnée, par exemple un jour donné, une semaine donnée, un semestre donné, etc.

Au cours d'une étape S1ᵣ, le dispositif de géolocalisation DGR (figures 1A et 1C) détecte que l'utilisateur UT met en oeuvre une action/activité dans une zone ZER de l'environnement réel dans lequel l'utilisateur UT évolue.

A cet effet, le dispositif DGR reçoit, via son interface de communication MCO₁, les données DATA_ACTᵣ en provenance du smartphone TEL, de la borne multimédia BOR, de l'objet connecté OBC, de l'interface IRA de réalité augmentée, du capteur CAP, du drone DRO, etc.

En S2ᵣ, les données DATA_ACTᵣ sont stockées dans la mémoire STO₁.

Au cours d'une étape S3ᵣ, le dispositif DGR détermine des données de géolocalisation de la zone ZER dans laquelle l'utilisateur UT a mis en oeuvre une action/activité. A cet effet, au cours de l'étape S3ᵣ, le dispositif DGR accède dans la mémoire STO₁ à ses propres données de géolocalisation DATA_LOCᵣ₀ si le dispositif DGR est situé dans la zone ZER. Dans ce contexte, l'étape S3ᵣ peut comprendre également la réception, via l'interface de communication MCO₁, de données de géolocalisation DATA_LOCᵣ en provenance du smartphone TEL, de la borne multimédia BOR, de l'objet connecté OBC, de l'interface IRA de réalité augmentée, du capteur CAP, du drone DRO, etc. Dans le cas où le dispositif DGR n'est pas situé dans la zone ZER, l'étape S3ᵣ est limitée à la réception, via l'interface de communication MCO₁, de données de géolocalisation DATA_LOCᵣ en provenance du smartphone TEL, de la borne multimédia BOR, de l'objet connecté OBC, de l'interface IRA de réalité augmentée, du capteur CAP, du drone DRO, etc.

En S4ᵣ, les données DATA_LOCᵣ sont stockées si besoin dans la mémoire STO₁. Les étapes S1ᵣ et S3ᵣ, respectivement S2ᵣ et S4ᵣ, peuvent être mises en oeuvre simultanément ou successivement dans n'importe quel ordre.

En S5ᵣ, le dispositif de géolocalisation DGR, via son dispositif de calcul CAL₁, met en forme une association EDR entre les données DATA_LOCᵣ et DATA_ACTᵣ dans la table TAB₁ précitée. A cet effet, ces données sont injectées dans la table TAB₁ précitée, laquelle a été préalablement enregistrée dans la base de données BD₁.

En S6ᵣ, le dispositif de géolocalisation DGR transmet la table TAB₁ au dispositif de traitement DET, via son interface de communication MCO₁ si le dispositif de géolocalisation DGR est distant du dispositif de traitement DET, ou via une liaison interne, par exemple un bus de données, si le dispositif de géolocalisation DGR et le dispositif de traitement DET font partie de la même entité.

Les étapes S1ᵣ à S6ᵣ sont itérées à différents instants prédéfinis de la durée donnée. Le procédé de géolocalisation qui vient d'être décrit est alors mis en oeuvre pour un ensemble d'utilisateurs.

Au cours d'une étape S7ᵣ, le dispositif de traitement DET reçoit, via son interface de communication MCO₃, la table TAB₁.

En S8ᵣ, le dispositif de traitement DET, via son interface d'accès IAC, injecte les données contenues dans la table TAB₁ dans la base de connaissance BC.

Au cours d'une étape S9ᵣ, le module de calcul CAL₃ du dispositif de traitement DET explore alors la base de connaissance BC pour déterminer si les actions/activités correspondant aux identifiants/paramètres de la table TAB₁ ont déjà été mises en oeuvre de manière prépondérante, significative ou fréquente par une pluralité d'utilisateurs (personnes physiques) dans la zone ZER considérée.

Si c'est le cas (« O » sur la figure 4A), le dispositif de marquage MAR du dispositif de traitement DET identifie en S10ᵣ la zone ZER considérée à un instant donné en tant que zone de l'environnement réel dédiée à la fourniture d'au moins un élément en lien avec les données DATA_ACTᵣ associées à la zone ZER ou en tant que zone de l'environnement réel configurable en fonction des données DATA_ACTᵣ. A cet effet, le dispositif de marquage MAR tague la zone ZER dans la base de connaissance BC.

Si ce n'est pas le cas (« N » sur la figure 4A), les actions/activités correspondant aux identifiants/paramètres de la table TAB₁ sont ignorées.

On décrit maintenant, en relation avec les figures 4B, 1B, 1C, 2B et 3, le déroulement d'un procédé de géolocalisation, selon un deuxième mode de réalisation particulier de l'invention.

Dans ce deuxième mode de réalisation, le procédé de géolocalisation est mis en oeuvre par le système de géolocalisation représenté sur les figures 1B et 1C.

Le procédé de géolocalisation de la figure 4B est mis en oeuvre pour un avatar donné AV_UT d'un utilisateur, pour une durée donnée, par exemple un jour donné, une semaine donnée, un semestre donné, etc.

Au cours d'une étape S1ᵥ, le dispositif de géolocalisation DGV (figures 1B et 1C) détecte que l'avatar AV_UT met en oeuvre une action/activité dans une zone ZEV de l'environnement virtuel dans lequel l'avatar AV_UT évolue.

A cet effet, le dispositif DGV reçoit, en provenance du dispositif DRV de restitution de l'environnement virtuel contenant la zone ZEV, via son interface de communication MCO₂, les données DATA_ACTᵥ du type précité, représentatives d'une action/activité de l'avatar AV_UT dans la zone ZEV.

En S2ᵥ, les données DATA_ACTᵥ sont stockées dans la mémoire STO₂.

Au cours d'une étape S3ᵥ, le dispositif DGV détermine des données de géolocalisation DATA_LOCᵥ de la zone ZEV dans laquelle l'avatar AV_UT a mis en oeuvre une action/activité. A cet effet, au cours de l'étape S3ᵥ, le dispositif DGV reçoit, en provenance du dispositif DRV de restitution de l'environnement virtuel contenant la zone ZEV, via son interface de communication MCO₂, les données DATA_LOCᵥ du type précité.

Les données DATA_LOCᵥ sont stockées en S4ᵥ dans la mémoire STO₂.

Les étapes S1 ᵥ et S3ᵥ, respectivement S2ᵥ et S4ᵥ, peuvent être mises en oeuvre simultanément ou successivement dans n'importe quel ordre.

En S5ᵥ, le dispositif de géolocalisation DGV, via son dispositif de calcul CAL₂, met en forme une association EDV entre les données DATA_LOCᵥ et DATA_ACTᵥ dans la table TAB₂ précitée. A cet effet, ces données sont injectées dans la table TAB₂ précitée, laquelle a été préalablement enregistrée dans la base de données BD₂.

En S6ᵥ, le dispositif de géolocalisation DGV transmet la table TAB₂ au dispositif de traitement DET, via son interface de communication MCO₂ si le dispositif de géolocalisation DGV est distant du dispositif de traitement DET, ou via une liaison interne, par exemple un bus de données, si le dispositif de géolocalisation DGV et le dispositif de traitement DET font partie de la même entité.

Les étapes S1 ᵥ à S6ᵥ sont itérées à différents instants prédéfinis de la durée donnée. Le procédé de géolocalisation qui vient d'être décrit est alors mis en oeuvre pour un ensemble d'avatars d'utilisateurs.

Au cours d'une étape S7ᵥ, le dispositif de traitement DET reçoit, via son interface de communication MCO₃, la table TAB₂.

En S8ᵥ, le dispositif de traitement DET, via son interface d'accès IAC, injecte les données contenues dans la table TAB₂ dans la base de connaissance BC.

Au cours d'une étape S9ᵥ, le module de calcul CALs du dispositif de traitement DET explore alors la base de connaissance BC pour déterminer si les actions/activités correspondant aux identifiants/paramètres de la table TAB₂ ont déjà été mises en oeuvre de manière prépondérante, significative ou fréquente par une pluralité d'avatars d'utilisateurs dans la zone ZEV considérée.

Si c'est le cas (« O » sur la figure 4B), le dispositif de marquage MAR du dispositif de traitement DET identifie en S10ᵥ la zone ZEV considérée à un instant donné en tant que zone de l'environnement virtuel dédiée à la fourniture d'au moins un élément en lien avec les données DATA_ACTᵥ associées à la zone ZEV ou en tant que zone de l'environnement virtuel configurable en fonction des données DATA_ACTᵥ. A cet effet, le dispositif de marquage MAR tague la zone ZEV dans la base de connaissance BC.

Si ce n'est pas le cas (« N » sur la figure 4B), les actions/activités correspondant aux identifiants/paramètres de la table TAB₂ sont ignorées.

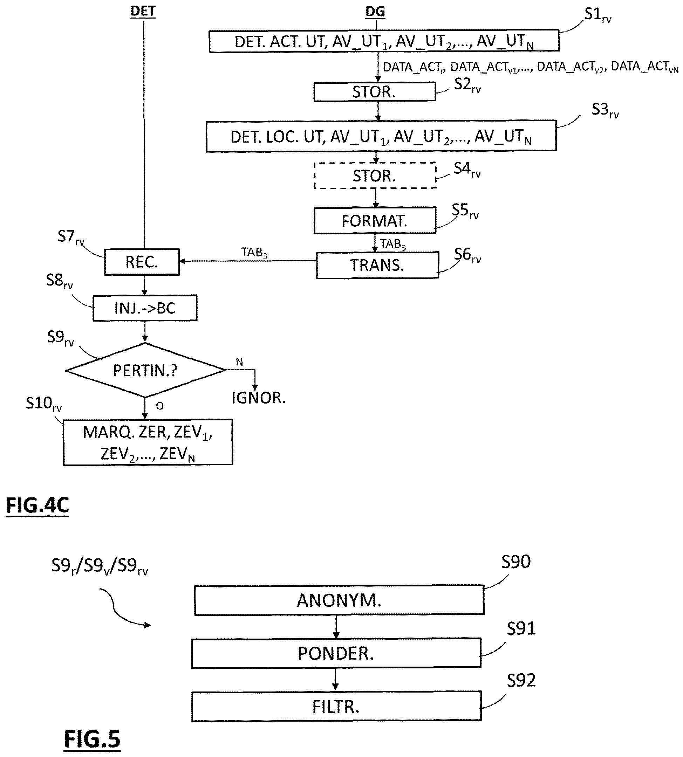

On décrit maintenant, en relation avec les figures 4C, 1C, 2A à 3, le déroulement d'un procédé de géolocalisation, selon un troisième mode de réalisation particulier de l'invention.

Dans ce troisième mode de réalisation, le procédé de géolocalisation est mis en oeuvre par le système de géolocalisation représenté sur la figure 1C.

Le procédé de géolocalisation de la figure 4C est mis en oeuvre à un instant donné de la durée de géolocalisation qui a été prédéfinie, pour un utilisateur donné UT, ainsi qu'une pluralité d'avatars AV_UT₁, AV_UT₂, ..., AV_UT_{N} associés à cet utilisateur UT dans respectivement N environnements virtuels EV₁, EV₂, ..., EV_{N}. Au cours d'une étape S1ᵣᵥ, à un instant donné t, le dispositif de géolocalisation DG (figure 1C) détecte que l'utilisateur UT met en oeuvre une action/activité dans une zone ZER de l'environnement réel dans lequel l'utilisateur UT évolue.

Au cours de cette étape S1ᵣᵥ, le dispositif de géolocalisation DG met alors en oeuvre une détection du caractère actif ou non actif des avatars AV_UT₁, AV_UT₂, ..., AV_UT_{N} dans une zone virtuelle respective ZEV₁, ZEV₂, ..., ZEV_{N} de leurs environnements virtuels EV₁, EV₂, ..., EV_{N} correspondants.

A cet effet, le dispositif DG reçoit :
-- via son interface de communication MCO₁, les données DATA_ACTᵣ en provenance du smartphone TEL, de la borne multimédia BOR, de l'objet connecté OBC, de l'interface IRA de réalité augmentée, du capteur CAP, du drone DRO, etc.,
-- via son interface de communication MCO₂, en provenance de tout ou partie de N dispositifs de restitution de respectivement N environnements virtuels contenant chacun une zone virtuelle respective ZEV₁, ZEV₂, ..., ZEV_{N} selon le caractère actif ou non actif des avatars AV_UT₁, AV_UT₂, ..., AV_UT_{N}, tout ou partie des données DATA_ACTᵥ₁, DATA_ACTᵥ₂,..., DATA_ACT_{vN} du type précité, représentatives d'une action/activité des avatars correspondants AV_UT₁, AV_UT₂, ..., AV_UT_{N} dans chacune de leur zone ZEV₁, ZEV₂, ..., ZEV_{N}.

En S2ᵣᵥ, les données DATA_ACTᵣ sont stockées dans la mémoire STO₁, tandis que les données DATA_ACTᵥ₁ à DATA_ACT_{vN} sont stockées dans la mémoire STO₂. A titre d'alternative, le dispositif de géolocalisation DG pourrait stocker l'ensemble de ces données dans une mémoire unique.

Au cours d'une étape S3ᵣᵥ, le dispositif DG détermine des données de géolocalisation de la zone ZER dans laquelle l'utilisateur UT a mis en oeuvre une action/activité. Cette étape est identique à l'étape S3ᵣ précitée et, pour cette raison, ne sera pas décrite à nouveau.

Au cours de cette étape S3ᵣᵥ, le dispositif DG détermine également, en fonction du caractère actif ou non actif des avatars AV_UT₁, AV_UT₂, ..., AV_UT_{N} de l'utilisateur UT, tout ou partie des données de géolocalisation DATA_LOCᵥ₁, DATA_LOCᵥ₂,..., DATA_LOC_{vN} relatives respectivement aux zones ZEV₁, ZEV₂, ..., ZEV_{N} dans lesquelles les avatars correspondants AV_UT₁, AV_UT₂, ..., AV_UT_{N} ont mis en oeuvre une action/activité. A cet effet, au cours de l'étape S3ᵣᵥ, le dispositif DG reçoit, en provenance de chaque dispositif DR₁ à DR_{N} de restitution de respectivement chaque environnement virtuel EV₁ à EV_{N}, via son interface de communication MCO₂, tout ou partie des données de géolocalisation DATA_LOCᵥ₁, DATA_LOCᵥ₂, ..., DATA_LOC_{vN}.

En S4ᵣᵥ :
- les données DATA_LOCᵣ sont stockées si besoin dans la mémoire STO₁,
- les données de géolocalisation disponibles parmi les données DATA_LOCᵥ₁, DATA_LOCᵥ₂, ..., DATA_LOC_{vN} sont stockées si besoin dans la mémoire STO₂.

A titre d'alternative, le dispositif de géolocalisation DG pourrait stocker l'ensemble de ces données dans une mémoire unique.

Les étapes S1 ᵣᵥ et S3ᵣᵥ, respectivement S2ᵣᵥ et S4ᵣᵥ peuvent être mises en oeuvre simultanément ou successivement dans n'importe quel ordre.

En S5ᵣᵥ, le dispositif de géolocalisation DG, via son dispositif de calcul CAL₁, met en forme une association EDR entre les données DATA_LOCᵣ et DATA_ACTᵣ dans la table TAB₃ précitée. A cet effet, ces données sont injectées dans la table TAB₃ précitée, laquelle a été préalablement enregistrée dans la base de données BD₁. Au cours de l'étape S5ᵣᵥ, le dispositif de géolocalisation DG, via son dispositif de calcul CAL₂, met en forme dans la table TAB₃ précitée :
- une association EDV₁ entre les données DATA_LOCᵥ₁ et DATA_ACTᵥ₁ si ces données sont disponibles. A cet effet, ces données sont injectées dans la table TAB₃ précitée, laquelle a été préalablement enregistrée dans la base de données BD₂,
- une association EDV₂ entre les données DATA_LOCᵥ₂ et DATA_ACTᵥ₂ si ces données sont disponibles. A cet effet, ces données sont injectées dans la table TAB₃ précitée, laquelle a été préalablement enregistrée dans la base de données BD₂,
- ...,
- une association EDV_{N} entre les données DATA_LOC_{vN} et DATA_ACT_{vN} si ces données sont disponibles. A cet effet, ces données sont injectées dans la table TAB₃ précitée, laquelle a été préalablement enregistrée dans la base de données BD₂.

A titre d'alternative, l'étape S5ᵣᵥ peut être mise en oeuvre en utilisant un unique dispositif de calcul et une unique base de données.

En S6ᵣᵥ, le dispositif de géolocalisation DG transmet la table TAB₃ au dispositif de traitement DET, via son interface de communication MCO₁ ou MCO₂ ou éventuellement une interface de communication unique, si le dispositif de géolocalisation DG est distant du dispositif de traitement DET, ou via une liaison interne, par exemple un bus de données, si le dispositif de géolocalisation DG et le dispositif de traitement DET font partie de la même entité.

Les étapes S1 ᵣᵥ à S6ᵣᵥ sont itérées à différents instants prédéfinis de la durée donnée.

Le procédé de géolocalisation qui vient d'être décrit est alors mis en oeuvre pour un ensemble d'utilisateurs et leurs avatars correspondants.

Au cours d'une étape S7ᵣᵥ, le dispositif de traitement DET reçoit, via son interface de communication MCO₃, la table TAB₃.

En S8ᵣᵥ, le dispositif de traitement DET, via son interface d'accès IAC, injecte les données contenues dans la table TAB₃ dans la base de connaissance BC.

Au cours d'une étape S9ᵣᵥ, le module de calcul CAL₃ du dispositif de traitement DET explore alors la base de connaissance BC pour déterminer si les actions/activités correspondant aux identifiants/paramètres de la table TAB₃ ont déjà été mises en oeuvre de manière prépondérante, significative ou fréquente par une pluralité d'utilisateurs (personnes physiques) dans la zone ZER considérée, respectivement par une pluralité d'avatars d'utilisateurs dans tout ou partie des zones ZEV₁, ZEV₂, ..., ZEV_{N}, selon qu'elles aient été considérées ou pas en fonction respectivement de l'activité ou de l'absence d'activité des avatars correspondants AV_UT₁, AV_UT₂, ..., AV_UT_{N} dans chacune de ces zones.

Si c'est le cas (« O » sur la figure 4C), le dispositif de marquage MAR du dispositif de traitement DET identifie en S10ᵣᵥ :
- la zone ZER considérée à un instant donné en tant que zone de l'environnement réel dédiée à la fourniture d'au moins un élément en lien avec les données DATA_ACTᵣ associées à la zone ZER ou en tant que zone de l'environnement réel configurable en fonction des données DATA_ACTᵣ,
- la ou les zones ZEV₁, ZEV₂, ..., ZEV_{N} considérées à un instant donné en tant que zones virtuelles dédiées chacune à la fourniture d'au moins un élément en lien avec les données DATA_ACTᵥ₁, DATA_ACTᵥ₂,..., DATA_ACT_{vN} associées respectivement aux zones ZEV₁, ZEV₂, ..., ZEV_{N} ou en tant que zones virtuelles configurables en fonction respectivement des données DATA_ACTᵥ₁, DATA_ACTᵥ₂,..., DATA_ACT_{vN}. A cet effet, le dispositif de marquage MAR tague la zone ZER, ainsi que la ou les zones ZEV₁, ZEV₂, ..., ZEV_{N}, dans la base de connaissance BC.

Si ce n'est pas le cas (« N » sur la figure 4C), les actions/activités correspondant aux identifiants/paramètres de la table TAB₃ sont ignorées.

On décrit maintenant en référence à la figure 5, différentes actions mises en oeuvre par le dispositif de traitement DET de données de géolocalisation lors de son exploration des tables TAB₁, TAB₂ et TAB₃.

Au cours de l'une ou l'autre des étapes S9ᵣ, S9ᵥ, S9ᵣᵥ précitées, le dispositif DET met en oeuvre ce qui suit :
En S90, le dispositif DET met en oeuvre une anonymisation des données contenues dans les tables TAB₁, TAB₂ et TAB₃.
En S91, le dispositif DET affecte des poids différents à chaque type d'actions identifiées dans les tables TAB₁, TAB₂ et TAB₃. A titre d'exemples non exhaustifs, l'achat d'un produit donné par un utilisateur ou un avatar peut avoir un poids relativement fort, alors qu'une simple recherche d'information sur ce même produit peut avoir un poids plus faible.
En S92, le dispositif DET met en oeuvre un filtrage des données contenues dans les tables TAB₁, TAB₂ etTABs. A titre d'exemples non exhaustifs, le dispositif DET peut fixer un seuil d'un certain nombre de mots clés associés à une action/activité particulière, par exemple lors de la recherche d'une marque ou de l'achat d'un produit détecté dans une zone, et si ce nombre n'est pas atteint, ne pas prendre en compte l'action/activité détectée. Selon un autre exemple, dans le cas de l'exploration de la table TAB₃, s'il est déterminé que les actions d'un avatar particulier ne sont jamais ou quasiment jamais mises en oeuvre par d'autres avatars dans la même zone virtuelle, les actions de cet avatar particulier ne seront plus explorées par la suite par le dispositif DET.

Les informations liées au marquage réalisé aux étapes S10ᵣ, S10ᵥ, S10ᵣᵥ sont des informations particulièrement pertinentes qui peuvent être exploitées à titre d'exemples non exhaustifs :
- pour alimenter des emplacements publicitaires, des lieux de ventes virtuels, etc. à installer ou déjà installés dans les zones ZER et/ou ZEV et/ou ZEV₁, ZEV₂, ..., ZEV_{N}, avec des contenu(s), produit(s) et/ou service(s) ayant un point commun avec les actions/activités particulières détectées dans ces zones ;
- pour fournir :
   -- dans la zone ZER, un contenu numérique en réalité augmentée qui est pertinent par rapport à l'action/activité détectée dans la zone ZER ;
   -- dans les zones ZEV et/ou ZEV₁, ZEV₂, ..., ZEV_{N}, un contenu numérique en réalité virtuelle qui est pertinent par rapport à l'action/activité détectée dans ces zones,
- pour permettre à des régies publicitaires de mettre en oeuvre de la publicité ciblée ou une commercialisation de produits dans les zones ZER et/ou ZEV et/ou ZEV₁ et/ou ZEV₂, ..., et/ou ZEV_{N},
- pour permettre à des collectivités territoriales, des agences d'urbanisme transitoire, des éditeurs de jeux vidéo, etc., de par exemple appréhender de manière plus précise et fiable une zone réelle ou virtuelle ayant reçu un marquage, afin de réagencer/ modifier cette zone réelle ou virtuelle en vue de l'adapter aux besoins des utilisateurs ou avatars circulant dans cette zone.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de géolocalisation comprenant ce qui suit :
- détecter (S1ᵣ ; S1ᵥ ; S1ᵣᵥ) qu'un utilisateur ou un avatar d'un utilisateur réalise une action dans son environnement réel ou virtuel respectivement,
- déterminer (S3ᵣ ; S3ᵥ ; S3ᵣᵥ) des données de géolocalisation d'une zone de l'environnement réel ou virtuel, dans laquelle l'action a été détectée,
- à partir desdites données de géolocalisation et de données représentatives de l'action détectée :
-- déterminer (S9ᵣ ; S9ᵥ ; S9ᵣᵥ) que l'action correspondant aux données de géolocalisation a déjà été mise en oeuvre par une pluralité de personnes physiques dans ladite zone de l'environnement réel ou par une pluralité d'avatars dans ladite zone de l'environnement virtuel, et que la mise en oeuvre de ladite action est prépondérante par rapport à la mise en oeuvre d'au moins une autre action dans ladite zone de l'environnement réel ou virtuel,
-- identifier (S10ᵣ ; S10ᵥ ; S10ᵣᵥ) ladite zone en tant que zone de l'environnement réel ou virtuel dédiée à la fourniture d'au moins un élément en lien avec les données représentatives de l'action détectée ou en tant que zone de l'environnement réel ou virtuel, configurable en fonction desdites données.

2. Procédé de géolocalisation selon la revendication 1, dans lequel :
- ladite action réalisée dans l'environnement réel comprend une interaction de l'utilisateur avec une interface présente dans l'environnement réel ou une activité de l'utilisateur qui a été détectée de manière autonome par un appareil de détection d'activité,
- ladite action réalisée dans l'environnement virtuel comprend une interaction de l'avatar d'un utilisateur avec un objet ou un autre avatar dans l'environnement virtuel.

3. Procédé de géolocalisation selon la revendication 1 ou la revendication 2, dans lequel ledit élément fourni dans la zone identifiée est un contenu multimédia.

4. Procédé de géolocalisation selon l'une quelconque des revendications précédentes, dans lequel si la zone de l'environnement réel ou virtuel est identifiée en tant que zone configurable, ladite zone est modifiée pour fournir un produit ou un service, en lien avec l'action détectée, à un utilisateur qui se trouve dans ladite zone identifiée de l'environnement réel ou à un avatar d'un utilisateur qui se trouve dans ladite zone identifiée de l'environnement virtuel.

5. Procédé de géolocalisation selon l'une quelconque des revendications précédentes, dans lequel, pour un utilisateur (UT) donné, à un instant donné, le procédé de géolocalisation est mis en oeuvre simultanément dans l'environnement réel où évolue l'utilisateur et/ou dans au moins un environnement virtuel où évolue un avatar (AV_UT₁, AV_UT₂, ..., AV_UT_{N}) dudit utilisateur.

6. Procédé de géolocalisation selon l'une quelconque des revendications précédentes, dans lequel les données de géolocalisation de la zone dudit au moins un environnement virtuel qui sont déterminées lors de la mise en oeuvre dudit procédé de géolocalisation sont associées à un indicateur (la) d'activité de l'avatar de l'utilisateur dans cette zone, ledit indicateur étant mis à une première valeur représentative d'une absence d'activité de l'avatar ou à une deuxième valeur représentative d'une activité effective de l'avatar.

7. Procédé de géolocalisation selon l'une quelconque des revendications précédentes, dans lequel les données de géolocalisation de ladite zone comprennent :
- les coordonnées en deux dimensions, respectivement en trois dimensions, d'un point de ladite zone, et
- le rayon d'un cercle, respectivement d'une sphère, centré(e) sur ledit point.

8. Procédé de géolocalisation selon l'une quelconque des revendications précédentes, dans lequel les données représentatives de l'action détectée comprennent au moins un identifiant (Id₁ ou Id₂) représentatif du type d'action.

9. Procédé de géolocalisation selon la revendication 8, dans lequel l'identifiant représentatif du type d'action est associé à au moins un indicateur d'un objet visé par l'action.

10. Procédé de géolocalisation selon la revendication 8 ou la revendication 9, dans lequel l'identifiant représentatif du type d'action est associé à une valeur de pondération de l'action.

11. Dispositif de géolocalisation, comprenant un processeur (PROC1) qui est configuré pour mettre en oeuvre ce qui suit :
- détecter qu'un utilisateur ou un avatar d'un utilisateur réalise une action dans son environnement réel ou virtuel respectivement,
- déterminer des données de géolocalisation d'une zone de l'environnement réel ou virtuel, dans laquelle l'action a été détectée,
- transmettre à un dispositif de traitement de données lesdites données de géolocalisation et des données représentatives de l'action détectée.

12. Dispositif de traitement de données de géolocalisation, comprenant un processeur (PROC2) qui est configuré pour mettre en oeuvre ce qui suit :
- recevoir en provenance d'un dispositif de géolocalisation, des données de géolocalisation d'une zone d'un environnement réel ou virtuel, dans laquelle a été détectée une action réalisée par un utilisateur ou un avatar d'un utilisateur, dans son environnement réel ou virtuel respectivement, ainsi que des données représentatives de l'action détectée,
- quand il a été déterminé que l'action correspondant aux données reçues a déjà été mise en oeuvre par une pluralité de personnes physiques dans ladite zone de l'environnement réel, respectivement par une pluralité d'avatars dans ladite zone de l'environnement virtuel, et que la mise en oeuvre de ladite action est prépondérante par rapport à la mise en oeuvre d'au moins une autre action dans ladite zone, identifier ladite zone en tant que zone dédiée à la fourniture d'au moins un élément en lien avec les données représentatives de l'action détectée ou en tant que zone configurable en fonction desdites données.

13. Système de géolocalisation comprenant :
- un dispositif de géolocalisation selon la revendication 11,
- un dispositif de traitement de données de géolocalisation selon la revendication 12.

14. Programme d'ordinateur comportant des instructions de code de programme pour la mise en oeuvre du procédé de géolocalisation selon l'une quelconque des revendications 1 à 10, lorsqu'il est exécuté sur un ordinateur.

15. Support d'informations lisible par un ordinateur, et comportant des instructions d'un programme d'ordinateur selon la revendication 14.
